# EUROPÄISCHE PATENTSCHRIFT

(11) **EP 3 506 441 B1**
(45) Veröffentlichungstag und Bekanntmachung des Hinweises auf die Patenterteilung: **15.02.2023**
(21) Anmeldenummer: 18208806.2
(22) Anmeldetag: 28.11.2018
(51) Int. Cl.: H02B 5/06, H02B 7/01, H01F 27/04, H02B 13/035

(54) **UMSPANNWERK**
SUBSTATION
POSTE ÉLECTRIQUE

(30) Priorität: 27.12.2017 DE 102017223817
(43) Veröffentlichungstag der Anmeldung: 03.07.2019
(73) Patentinhaber: Siemens Energy Global GmbH & Co. KG, 81739 München (DE)
(72) Erfinder: Findeisen, Jörg, 01156 Dresden (DE)

(56) Entgegenhaltungen:
- EP-A1- 1 326 313
- EP-A1- 2 863 053
- EP-A1- 3 247 011
- EP-A2- 0 822 632
- WO-A1-02/075757
- DE-A1- 3 240 724
- DE-A1-102007 057 017
- FR-A- 1 097 411
- JP-U- S 532 625

## Beschreibung

Die Erfindung betrifft ein Umspannwerk mit einem Transformator, einer innerhalb eines Gehäuses angeordneten und mit dem Transformator über eine elektrische Verbindung leitfähig verbundenen Schaltanlage, wobei das Gehäuse der Schaltanlage über eine die elektrische Verbindung umschließende Flanschverbindung mit dem Transformator verbunden ist.

Ein solches Umspannwerk ist aus der EP 2 863 053 A1 bekannt, das dort offenbarte Umspannwerk ist zum Abstellen auf einer Plattform vorgesehen, die an einem Turm einer Windenergieanlage befestigt ist. Das Umspannwerk umfasst einen Transformator mit Kühlanlage sowie elektrische Komponenten, die eine Schaltanlage mit Hochspannungsableitern und Kabelabgängen umfassen. Die aufgezählten Komponenten des Umspannwerks sind fest miteinander verbunden, so dass das vorbekannte Umspannwerk einfach mit einem Kran auf die am Turm der Windenergieanlage vorgesehene Plattform gehoben werden kann.

Auch die JP S53 2625 U offenbart ein Umspannwerk mit Transformator und Schaltanlage, die in räumlicher Nähe zueinander aufgestellt sind.

Die EP 1 362 313 A1 beschreibt eine Anlage, die zum Umwandeln einer Mittelspannung in eine Niederspannung dient. Hierzu ist wieder ein Transformator eingesetzt, der in einem Gehäuse aufgestellt wird. Das Gehäuse stellt eine vollständige Kapselung der Umspannanlage bereit, so dass Unfälle mit einer Gefahr für vorbeilaufende Personen vermieden sind. Neben dem Transformator sind Komponenten einer Schaltanlage in dem Gehäuse angeordnet, die über eine elektrische Verbindung mit dem Transformator verbunden sind. Dabei sind die Komponenten an einer Gehäusewand oder direkt am Transformator abgestützt. Zum Kühlen des Transformators sind Luftspalte vorgesehen, so dass Atmosphärenluft an dem Tank des Transformators vorbeistreichen und so die vom ihm erzeugte Wärme abführen kann.

Die WO 02/075757 A1 offenbart ebenfalls ein Umspannwerk mit Transformator und gasisolierter Schaltanlage, wobei zwischen der Schaltanlage und dem Transformator thermische Abschirmelemente offenbart sind.

Weitere Umspannwerke sind in der FR 1 097 411 A und in der EP 0 822 632 A2 beschrieben.

Ein Umspannwerk dient unter anderem der Verbindung unterschiedlicher Spannungsebenen und umfasst typischerweise einen Transformator und eine zugeordnete Schaltanalage. In Umspannwerken ist eine aufwändige Verbindung zwischen Transformatoren und Schaltanlagen notwendig. Diese Verbindungen benötigen einen großen Raumbedarf. Insbesondere bei Offshore-Umspannwerken, aber auch bei konventionellen Umspannwerken, führt dies zu hohen Kosten.

Vom Stand der Technik bekannt sind Umspannwerke, bei denen elektrisch leitfähige Verbindungen zwischen Transformatoren und gasisolierten Schaltanlagen über gasisolierte Leitungen oder über Hochspannungskabel geführt werden. Gasisolierte Leitungen weisen einen großen Raumbedarf auf und verursachen hohe Kosten. Gerade Offshore-Plattformen werden durch mechanische Belastungen auf Biegung beansprucht. Aufgrund ihres starren Aufbaus können gasisolierte Leitungen diese nur schwer ausgleichen. Der alternative Einsatz von Hochspannungskabeln hat aufgrund deren großer Biegeradien ebenfalls einen hohen Raumbedarf zur Folge. Weiterhin sind dabei aufwändige Kabeltrassen erforderlich.

Aufgabe der Erfindung ist es, ein Umspannwerk der oben genannten Art bereitzustellen, das einfach und kostengünstig ist, wobei gleichzeitig ein sicherer Betrieb gewährleistet ist.

Die Erfindung löst diese Aufgabe dadurch, dass das Gehäuse der Schaltanlage mit Luft gefüllt ist und von dem Transformator thermisch entkoppelt ist, wobei das Gehäuse der Schaltanlage von dem Transformator durch einen Spalt zwischen Gehäuse und Transformator räumlich voneinander beabstandet ist, wobei die Flanschverbindung einen an dem Gehäuse angebrachten Gehäuseflansch und einen daran anschließenden Gegenflansch umfasst, wobei der Gegenflansch außen an einem die elektrische Verbindung umschließenden Dom angebracht ist, wobei die elektrische Verbindung durch eine Öl-Gas-Durchführung geführt ist, welche an einem Übergang von einem mit der Schaltanlage verbundenen schaltanlagenseitigen Dom und einem mit dem Transformator verbundenen transformatorseitigen Dom positioniert ist, wobei außen an dem transformatorseitigen Dom der Gegenflansch angebracht ist und wobei der transformatorseitige Dom am Transformator befestigt ist, in das Gehäuse der Schaltanlage hineinragt und von dem Gehäuseflansch umschlossen ist.

Erfindungsgemäß wird ein Umspannwerk zur Verfügung gestellt, welches einen Transformator umfasst. Ferner umfasst das Umspannwerk eine innerhalb eines Gehäuses angeordnete und mit dem Transformator über eine elektrische Verbindung leitfähig verbundene Schaltanlage, wobei das Gehäuse der Schaltanlage über eine die elektrische Verbindung umschließende Flanschverbindung mit dem Transformator verbunden ist.

Erfindungsgemäß ist die Schaltanlage eine gasisolierte Schaltanlage, wobei als Gas beispielsweise Schwefelhexafluorid, Gasgemische oder aber auch andere Gase Verwendung finden. Der Begriff des Transformators umfasst dabei nicht nur einen Transformatorkern mit Wicklung, sondern beispielsweise auch das Transformatorgefäß und eine etwaige Isolierflüssigkeit in diesem Gefäß.

Das vorgeschlagene Umspannwerk hat den Vorteil, dass ein kompaktes Umspannwerk durch die direkte Verbindung der Schaltanlage über das Gehäuse mittels der Flanschverbindung bereitgestellt wird. Es wird eine erhebliche Vereinfachung im Vergleich zu Umspannwerken des Standes der Technik erzielt und deutlich Platz und Masse durch die direkte Flanschverbindung des die Schaltanlage umfassenden Gehäuses eingespart im Vergleich zu konventionellen Konzepten, bei denen eine Verbindung über lange gasisolierte Leitungen oder Hochspannungskabel erfolgt. Die Flanschverbindung im Vergleich ermöglicht eine direkte, unmittelbare Ankopplung an den Transformator, welche eine starre, typischerweise lösbare Verbindung zwischen Schaltanlage bzw. Gehäuse und Transformator herstellt. Dadurch werden Relativbewegungen zwischen Transformator und Schaltanlage vorteilhaft eliminiert und es kann auf Ausgleichsvorrichtungen wie beispielsweise Kompensatoren oder Kabelschlaufen verzichtet werden. Die innerhalb des Gehäuses angeordnete Schaltanlage benötigt ferner kein eigenes Fundament bzw. eigene Plattform oder eine eigene Gründungsstruktur. Zudem wird durch die Flanschverbindung und das Gehäuse ein sicherer Abschluss der Schaltanlage und der elektrischen Anschlüsse des Transformators vor Umgebungseinflüssen hervorgerufen. Der Transformator kann auch vorteilhaft zusammen mit der Schaltanlage verhoben werden. Hierbei geht auch ein, dass der Transformator die schwerste Komponente des Umspannwerks ist, sodass der Massenschwerpunkt am Transformator konzentriert ist und somit trotz der Verbindung mit einem großen Schaltanlagenmodul, eine stabile Statik und auch ein sicheres Verheben ermöglicht wird. Zudem sind keine Kabeltraversen oder Traversen für Rohre der gasisolierten Leitungen notwendig. Gerade bei Offshore-Umspannwerken entfalten die oben genannten Vorteile, insbesondere das ermöglichte gemeinsame Verheben und Befestigen von Transformator und Schaltanlage, eine besonders vorteilhafte Wirkung. Schaltanlage und Gehäuse bilden ein Kompaktschaltmodul, welches vormontiert und vorgeprüft mit einem Transformator verbunden werden kann.

Erfindungsgemäß ist das Gehäuse der Schaltanlage von dem Transformator thermisch entkoppelt. Hierbei können verschiedene Mittel zur thermischen Entkopplung verwendet werden. Die Temperatur der Isolierflüssigkeit des Transformators kann bspw. 100 °C übersteigen. Durch die thermische Entkopplung wird verhindert, dass durch die direkte Verbindung eine Aufheizung der Schaltanlage bzw. des Innenraums des Gehäuses durch den Transformator im Betrieb erzeugt wird.

Im Rahmen der Erfindung ist das Gehäuse der Schaltanlage von dem Transformator durch einen Spalt zwischen Schaltanlage und Transformator räumlich voneinander beabstandet. Dadurch kann Wärme von der Luft innerhalb des Spaltes aufgenommen und wegtransportiert werden. Dies ist eine besonders einfache Vorrichtung zur thermischen Entkopplung.

Vorzugsweise ist zwischen dem Gehäuse der Schaltanlage und dem Transformator ein thermisches Abschirmelement positioniert. Das thermische Abschirmelement kann hierbei eine Wärmeübertragung vom Transformator zum Gehäuse der Schaltanlage verhindern oder zumindest deutlich verringern. Das thermische Abschirmelement kann auch als thermische Barriere bezeichnet werden und kann ferner innerhalb des oben beschriebenen Spalts positioniert sein.

Erfindungsgemäß umfasst die Flanschverbindung einen an dem Gehäuse angebrachten Gehäuseflansch und einen daran anschließenden Gegenflansch, wobei der Gegenflansch außen an einem die elektrische Verbindung umschließenden Dom angebracht ist. An solchen Domen kann besonders geeignet eine luftdichte Flanschverbindung ausgebildet werden. Dadurch kann das Gehäuse besonders einfach dicht abgeschlossen werden.

Erfindungsgemäß ist die elektrische Verbindung durch eine Öl-Gas-Durchführung geführt, welche an einem Übergang von einem mit der Schaltanlage verbundenen rohrförmigen schaltanlagenseitigen Dom und einem mit dem Transformator verbundenen transformatorseitigen Dom positioniert ist, wobei außen an dem transformatorseitigen Dom der Gegenflansch angebracht ist. Durch die Anbringung der Flanschverbindung am transformatorseitigen Dom liegt ein Großteil der Öl-Gas-Durchführung im Innern des Gehäuses der Schaltanlage und ist somit vom Innern des Gehäuses zugänglich. Der schaltanlagenseitige Dom ist ferner vollständig innerhalb des Gehäuses positioniert. Somit liegen die gasseitigen Anschlüsse vollständig innerhalb des Gehäuses und können somit von dort aus gewartet werden. Der transformatorseitige Dom ragt ebenfalls in das Gehäuse der Schaltanlage hinein. Somit ist sichergestellt, dass die Öl-Gas-Durchführung vom Gehäuse aus gut erreichbar ist. Die Verbindung der Durchführung ist innerhalb des Gehäuses realisierbar.

Erfindungsgemäß ist der transformatorseitige Dom am Transformator befestigt, ragt in das Gehäuse der Schaltanlage hinein und wird von dem Gehäuseflansch umschlossen. Hierdurch wird der Zugang zur Öl-Gas-Durchführung vom Innenraum des Gehäuses ermöglicht.

Bevorzugt umfasst der Gehäuseflansch einen Innendurchmesser, welcher größer ist als die radiale Ausdehnung der Öl-Gas-Durchführung. Dadurch kann das Gehäuse mit der Schaltanlage über die Öl-Gas-Verbindung geführt werden kann. Dadurch kann eine einfache Montage oder Demontage der Flanschverbindung erfolgen, ohne dass die Öl-Gas-Verbindung abmontiert werden muss.

Bevorzugt ist zumindest ein Dom mit einem Handloch versehen, welches in der Nähe der Öl-Gas-Durchführung und innerhalb des Gehäuses der Schaltanlage positioniert ist. Somit ist mittels des Handlochs sichergestellt, dass die Öl-Gas-Durchführung vom Gehäuse aus über einen Dom gut erreichbar ist. Das Handloch ist bevorzugt derart positioniert, dass der transformatorseitige elektrische Anschlusskontakt der Öl-Gas-Durchführung vom Innenraum des Gehäuses der Schaltanlage über das Handloch erreichbar ist.

Vorzugsweise umfasst das Gehäuse der Schaltanlage eine Zugangsöffnung zum Betreten des Gehäuses. Somit können bei entsprechender Dimensionierung bzw. Bemessungen des Gehäuses Wartungsarbeiten z. B. der Schaltanlage oder der Öl-Gas-Durchführung, Montage und Demontage der Öl-Gas-Durchführung im Inneren des Gehäuses ermöglicht werden.

Vorzugsweise ist das Gehäuse der Schaltanlage mit mechanischen Befestigungsmitteln an dem Transformator lösbar befestigt, vorzugsweise lösbar befestigt. Als Befestigungsmittel können beispielswiese Befestigungskonsolen vorgesehen sein. Dadurch wird die Flanschverbindung gestützt und somit eine feste Einheit aus Gehäuse, Schaltanlage und Transformator ausgebildet.

Bevorzugt sind ein Wärmetauscher, ein Gleichrichter und/oder eine weitere elektrische Funktionseinheit und/oder ein Steuer- und Überwachungsmodul zum Betrieb des Umspannwerks an dem Transformator mechanisch befestigt. Dadurch können auch diese Zusatzkomponenten fest mit dem Transformator verbunden und gemeinsam mit dem Transformator verhoben werden. Vorzugsweise umfasst das Gehäuse der Schaltanlage und/oder der Gleichrichter eine vom Transformator unabhängige Kühlanlage. Mittels der Kühlanlage kann ferner ein Temperaturanstieg des Gehäuses der Schaltanlage durch entsprechende Temperaturkontrolle bzw. Regelung der Temperatur verhindert werden.

Vorzugsweise ist die Schaltanlage zusammen mit dem Transformator des Umspannwerkes, insbesondere eines Offshore-Umspannwerks, mittels eines an dem Transformator angreifenden Befestigungsmittels an eine Gründungsstruktur oder eine Plattformstruktur befestigt. Somit kann das gesamte Umspannwerk mittels des Transformators auf einer Gründungsstruktur bei Offshore-Umspannwerken oder auf entsprechenden Plattformstrukturen verankert werden. Die Schaltanlage benötigt keine eigenen Befestigungsmittel zur Befestigung an der Plattform, was kosten- und raumsparend ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Darstellung eines Umspannwerks nach einer ersten Ausführungsform,
- Figur 2: eine schematische Darstellung eines Umspannwerks in Explosionsdarstellung,
- Figur 3: eine perspektivische Darstellung eines Umspannwerks,
- Figur 4: eine schematische Darstellung eines Umspannwerks nach einer zweiten Ausführungsform, und
- Figur 5: eine schematische Darstellung eines Umspannwerks nach einer dritten Ausführungsform, die nicht Teil der Erfindung ist

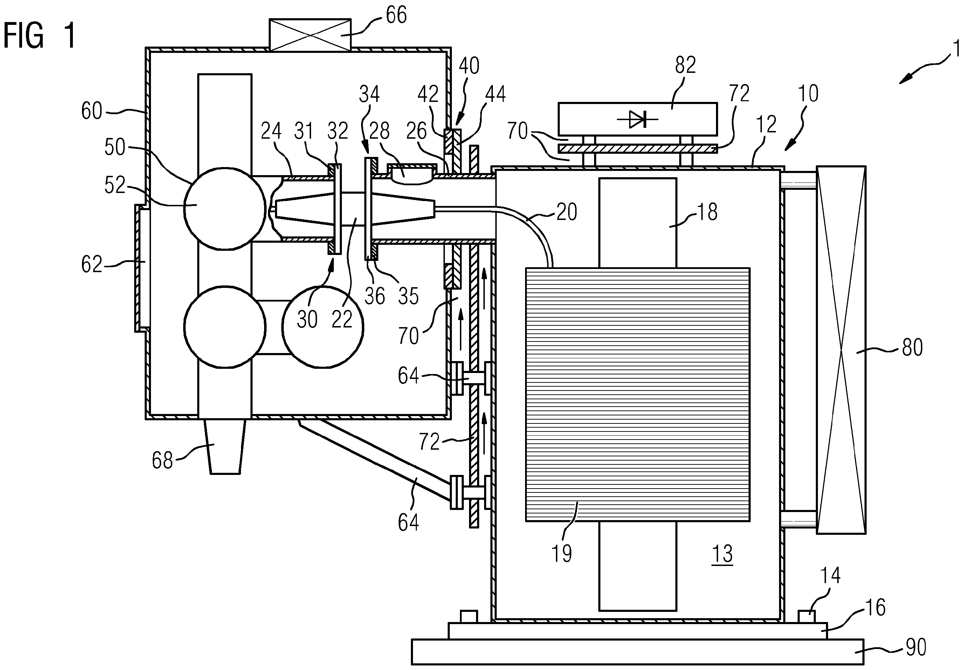

In der Figur 1 ist ein erfindungsgemäßes Umspannwerk 1 gezeigt. Das Umspannwerk 1 umfasst dabei einen Transformator 10. Der Transformator 10 umfasst hierbei beispielhaft einen Kern 18 mit einer Wicklung 19. Ferner umfasst der Transformator 1 beispielhaft ein Transformatorgefäß 12, in welches der Transformator 1 eingelassen ist. Das Transformatorgefäß 12 des Transformators 1 ist bevorzugt mit einer Isolierflüssigkeit 13 bzw. von einer Kühlflüssigkeit gefüllt. Dabei können traditionelle Isolierflüssigkeiten auf Basis von Öl, insbesondere Mineralöl, zum Einsatz kommen. In einer bevorzugten Ausführungsform kommt eine Isolierflüssigkeit auf Basis eines Esters zum Einsatz. Diese sind biologisch abbaubar und aufgrund ihres höheren Flammpunktes brandsicherer als Isolierflüssigkeiten auf Basis von Mineralöl.

Das Umspannwerk 1 umfasst ferner eine Schaltanlage 50. Die Schaltanlage 50 ist über eine elektrische Verbindung 20, bevorzugt eine Hochspannungsverbindung, mit dem Transformator 10 verbunden. Die Schaltanlage 50 ist dabei eine gasisolierte Schaltanlage, welche mit Isoliergas 52 befüllt ist. Dabei kann beispielsweise Schwefelhexafluorid oder ein Gasgemisch zum Einsatz kommen, wobei die Erfindung nicht darauf beschränkt ist.

Die Schaltanlage 50 ist innerhalb eines Gehäuses 60 angeordnet. Das Gehäuse 60 der Schaltanlage 50 ist wiederum über eine die elektrische Verbindung 20 umschließende Flanschverbindung 40 mit dem Transformator 10 verbunden. Mittels der direkten Flanschverbindung 40 wird ein kompaktes, raumsparendes Umspannwerk 1 zur Verfügung gestellt. Die Flanschverbindungen 40 sind dabei typischerweise lösbar ausgeführt. Der Transformator 10 kann durch die Erfindung zusammen mit der Schaltanlage 50 verhoben werden. Zudem sind keine Kabeltraversen oder Traversen für Rohre der gasisolierten Leitungen notwendig. Schaltanlage 50 und Gehäuse 60 bilden ein Kompaktschaltmodul, welches vormontiert und vorgeprüft mit dem Transformator 10 verbunden werden kann.

Durch die unmittelbare, direkte Anbindung der Schaltanlage 50 kann es zur Übertragung von Wärme von dem Transformator 10 zu der Schaltanlage 50 kommen. Beispielsweise kann die Temperatur der Isolierflüssigkeit 13 im Betrieb oberhalb von 100 °C liegen. Somit ist es vorteilhaft, wenn durch den Einsatz von Mitteln, die die Wärmeübertragung auf die Schaltanlage 50 verhindern, das Gehäuse 60 von der Schaltanlage 50 von dem Transformator 10 thermisch entkoppelt wird. Ein Mittel zum Erreichen der thermischen Entkopplung ist erfindungsgemäss dadurch erzielt, dass das Gehäuse 60 der Schaltanlage 50 von dem Transformator 10 durch einen Spalt 70 räumlich voneinander beabstandet ist. Somit wird die Wärme des Transformators 10 an die umgebende Luft, also auch an die innerhalb des Spalts 70 befindliche Umgebungsluft abgegeben und abtransportiert.

Zusätzlich oder alternativ kann, wie in der vorliegenden Figur 1 gezeigt, zwischen dem Gehäuse 60 der Schaltanlage 50 und dem Transformator 10 ein thermisches Abschirmelement 72 positioniert sein, welches Wärmübertragung vom Transformator 1 zur Schaltanlage 50 verhindert oder zumindest deutlich reduziert. Ferner ist in diesem Ausführungsbeispiel auch eine Kühlanlage 66 bzw. ein Kühlelement an dem Gehäuse 60 angebracht bzw. von dem Gehäuse 60 umfasst. Die Kühlanlage 66 kann folglich einen möglichen Anstieg der Temperatur innerhalb des Gehäuses 60 durch Temperaturregelung aktiv verhindern.

Die Flanschverbindung 40 umfasst ferner einen an dem Gehäuse 60 angebrachten Gehäuseflansch 42 und einen daran anschließenden Gegenflansch 44. Der Gegenflansch 44 ist dabei außen an einem die elektrische Verbindung 20 umschließenden Dom 24, 26 angebracht. Dome sind dabei bevorzugt rohrförmig ausgebildet. Gehäuseflansch 42 und Gegenflansch 44 bilden die Flanschverbindung 40 aus. Die Dome 24, 26 können beispielsweise einen runden oder eckigen Querschnitt, beispielsweise rechteckigem Querschnitt, aufweisen, wobei die Erfindung nicht darauf beschränkt ist. An den Domen 24, 26 kann bevorzugt radial bzw. nach außen auskragend der Gegenflansch 44 angebracht sein. Die Flanschverbindung 40 umschließt dann entsprechend den Dom 26.

Ferner wird erfindungsgemäss die elektrische Verbindung 20 durch eine Öl-Gas-Durchführung 22 geführt, welche die elektrische Verbindung 20, insbesondere eine Hochspannungsleitung, sicher von der mit Isoliergas gefüllten Schaltanlage 50 zum mit einer Isolierflüssigkeit gefüllten Transformator 10 führt. Die Öl-Gas-Durchführung 22 ist dabei an einem Übergang von einem mit der Schaltanlage 50 verbundenen schaltanlagenseitigen Dom 24 und einem mit dem Transformator 10 verbundenen transformatorseitigen Dom 26 positioniert. Erfindungsgemäss ist, wie in der Figur 1 zu sehen, an dem transformatorseitigen Dom 26 der Gegenflansch 44 angebracht, an welchen der Gehäuseflansch 42 des Schaltanlagenmodules zur Ausbildung der Flanschverbindung 40 anschließt. Der wesentliche Teil der Öl-Gas-Durchführung 22 liegt somit im Inneren des Gehäuses 60 und ist somit vom Gehäuse 60 der Schaltanlage 50 erreichbar. Der schaltanlagenseitige Dom 24 ist ferner somit vollständig innerhalb des Gehäuses 60 positioniert, sodass die gasseitigen Anschlüsse vom Gehäuse 60 aus zugänglich sind. Der transformatorseitige Dom 26 ragt ferner in das Gehäuse 60 der Schaltanlage 50 hinein und kann somit auch vom Gehäuse 60 aus erreicht werden.

Die Öl-Gas-Durchführung 22 kann dabei an die Dome 24, 26 mittels Durchführungsflanschverbindungen 30, 34 dicht angeschlossen sein. Dabei umfasst in dieser Ausführungsform die erste Durchführungsflanschverbindung 30 einen ersten domseitigen Flansch 31, welcher an dem schaltanlagenseitigen Dom 24 angebracht ist und welcher an einen ersten Durchführungsflansch 33 der Öl-Gas-Durchführung 22 anschließt. Ferner umfasst die zweite Durchführungsflanschverbindung 34 einen zweiten domseitigen Flansch 35, welcher an dem transformatorseitigen Dom 26 angebracht ist und welcher an einen zweiten Durchführungsflansch 36 der Öl-Gas-Durchführung 22 anschließt. Zur Vereinfachung der Anbindung kann der schaltanlagenseitige Dom 24 auch als Balg, insbesondere metallischer Balg, ausgeführt sein.

In der vorliegenden rein beispielhaften Ausführungsform umfasst der transformatorseitige Dom 26 ein Handloch 28 an dessen Außenseite. Das Handloch 28 ist dabei bevorzugt, wie in der Figur gezeigt, in der Nähe der Öl-Gas-Durchführung 22 positioniert. Zudem ist das Handloch 28 innerhalb des Gehäuses 60 positioniert, sodass beispielswiese bequem ein Austausch oder Reparatur der Öl-Gas-Durchführung 22 über das Handloch 28 erfolgen kann.

Das Gehäuse 60 ist dabei bevorzugt derart dimensioniert, dass Wartungsarbeiten an der Schaltanlage 50 möglich sind. Erfindungsgemäss ist das Gehäuse 60 mit Luft gefüllt. Das Gehäuse 60 weist beispielhaft ferner eine Zugangsöffnung 62 zum Betreten des Gehäuses 60 auf.

Das Gehäuse 60 kann neben der Flanschverbindung 40 auch weitere stützende mechanische Anbindungen aufweisen, um eine starre, mechanisch stabile Verbindung zwischen Gehäuse 60 und Transformator 10 herzustellen. Dazu ist hierbei beispielhaft das Gehäuse 60 der Schaltanlage 50 mit mechanischen Befestigungsmitteln 64 an dem Transformator 10 befestigt. Bevorzugt ist dazu eine mechanisch lösbare Befestigung des Gehäuses 60 vorgesehen. Dazu sind in dem vorliegenden Beispiel mehrere Befestigungskonsolen vorgesehen, welche an das Transformatorgefäß 12 des Transformators 10 angreifen.

Bevorzugt können auch weitere elektrische Funktionselemente mittels Befestigungselementen an dem Transformator 10 direkt befestigt werden. Bevorzugt kann das wie in dieser Figur ein Wärmetauscher 80 für das Isolierflüssigkeit 13 des Transformators sein. Noch bevorzugter oder auch zusätzlich kann ein Gleichrichter 82 mechanisch an den Transformator befestigt werden. Entsprechende Spalte 70 und/oder thermische Abschirmelemente 72 zur Reduktion von Wärmeübertragung können ebenfalls vorgesehen sein. Alternativ oder zusätzlich können weitere elektrische Funktionseinheiten, wie beispielsweise Steuer- und Überwachungsmodule oder Schaltmodule zum Betrieb des Umspannwerks 1 an dem Transformator 10 mechanisch befestigt sein. Diese Komponenten können somit vorteilhaft mit dem Transformator 10 verhoben oder befestigt werden.

In dieser Figur 1 ist ferner gezeigt, dass die Schaltanlage 50 zusammen mit dem Transformator 10 des Umspannwerkes 1 mittels eines an dem Transformator 10 angreifenden Befestigungsmittel 14 an eine Plattform 90 beziehungsweise eine Gründungsstruktur befestigt ist. Die Schaltanlage 50 benötigt somit keine eigenständigen Befestigungsmittel. Die Befestigungsmittel des Transformators 1 können beispielsweise an einem Transformatorfundament 16 positioniert sein, wobei die Erfindung nicht darauf beschränkt ist. Insbesondere bei Offshore-Umspannwerken kann dieser Umstand besonders vorteilhaft sein, weil so die Schaltanlage 50 gemeinsam mit dem Transformator 10 an der Plattform 90 oder Gründungsstruktur, z. B. einem Monopile, Tripod etc., verankert werden kann, wodurch sich eine erhebliche konstruktive Vereinfachung einstellt. Auch bei Umspannwerken 1, die nicht als Offshore-Umspannwerke verwendet werden, kann vorteilhaft nur eine Fixierung oder Befestigung der gesamten Anlage lediglich über die am Transformator 10 angreifenden Befestigungsmittel 14 an einem Bodenbereich erfolgen.

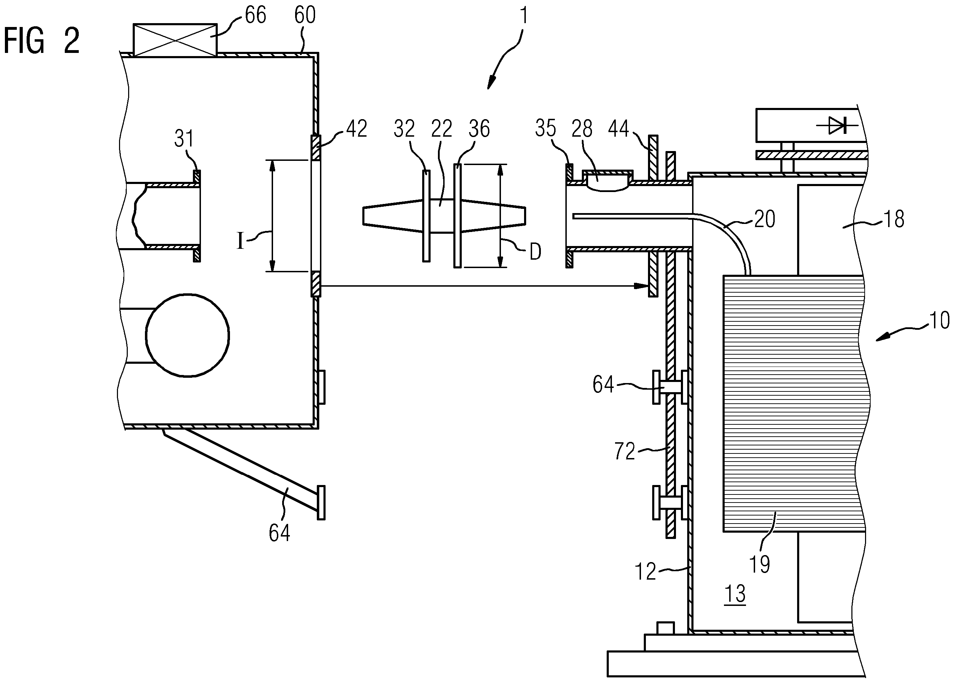

Figur 2 zeigt das Umspannwerk 1 nach Figur 1 in Explosionsdarstellung. Insbesondere ist in dieser Darstellung der den Gehäuseflansch 42 aufweisenden Teil des Gehäuses 60 gezeigt, welcher in der zusammengebauten Stellung, siehe Figur 1, die Flanschverbindung 40 mit dem transformatorseitigen Gegenflansch 44 erzeugt. In dieser beispielhaften Ausführungsform ist ferner ein Innendurchmesser I des Gehäuseflanschs 42 größer als eine radiale Ausdehnung D der Öl-Gas-Durchführung 22. Insbesondere ist der Innendurchmesser I größer als die radiale Ausdehnung des ersten und zweiten Durchführungsflanschs 32, 36, sodass die Flanschverbindung 40 den transformatorseitigen Dom 26 umschließt und bei der Montage oder Abnahme über die Öl-Gas-Durchführung 22 geführt werden kann. Für die weiteren technischen Merkmale wird auf die Beschreibung zu Figur 1 verwiesen.

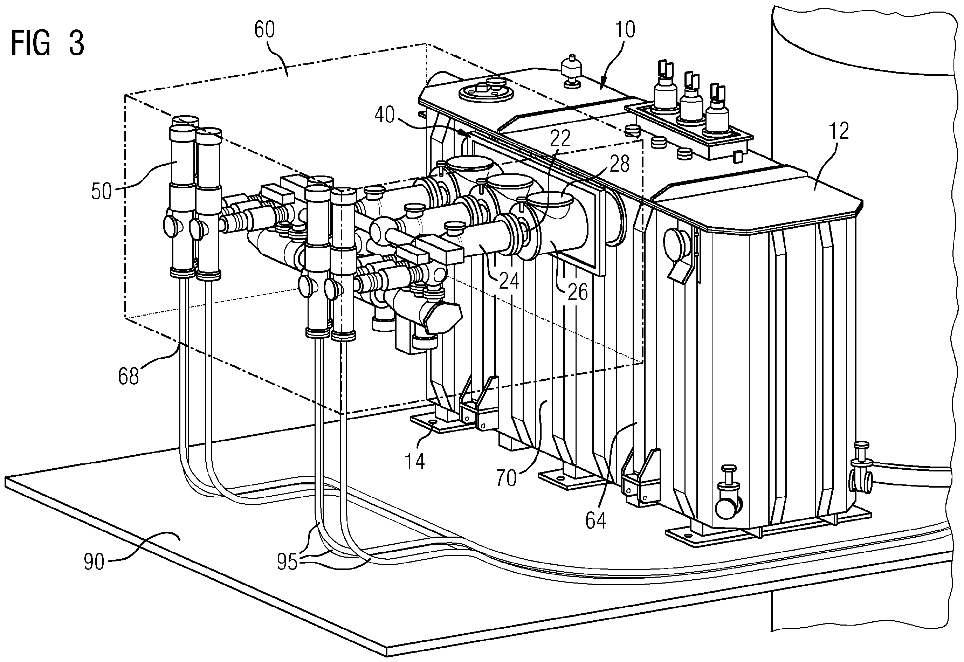

Figur 3 zeigt eine perspektivische Darstellung eines erfindungsgemäßen Umspannwerks 1. Insbesondere ist in dieser Figur das Gehäuse 60 lediglich schematisch angedeutet, sodass die innerhalb des Gehäuses 60 angeordnete Schaltanlage 50 sichtbar ist. Die über die Flanschverbindung 40 mit dem Transformator 1 direkt verbundene Schaltanlage 50 wird alleine von dem Transformator 1, welcher die schwerste Einheit des Umspannwerks 1 darstellt, getragen. Nur der Transformator 1 ist über an dem Transformator 10 angreifenden Befestigungsmittel 14 mit der Gründungsstruktur, bzw. an einer Plattform 90 bzw. Tragestruktur einer Gründungsstruktur befestigt. Damit werden alle Relativbewegungen zwischen dem Modul der Schaltanlage 50 und dem Transformator 10 vermieden. Dies ist insbesondere bei der Aufstellung auf einer Offshore Plattform 90 vorteilhaft.

Ferner sind in dieser Ausführungsform rohrförmige Dome 24, 26 sichtbar, durch welche die elektrische Verbindung 20 geführt ist. In dieser beispielhaften Ausführungsform sind beispielhaft drei elektrische Verbindungen mit je zwei Domen 24, 26 vorgesehen, wobei die Erfindung nicht darauf beschränkt ist. Weiterhin sind in dieser Figur Kabel 95, beispielsweise Seekabel, vorgesehen, welche über eine Kabeldurchführung 68 in das Gehäuse 60 an die Schaltanlage 50 angeschlossen sind. Für weitere Details und Ausführungsformen ist wiederum auf die Figur 1 verwiesen.

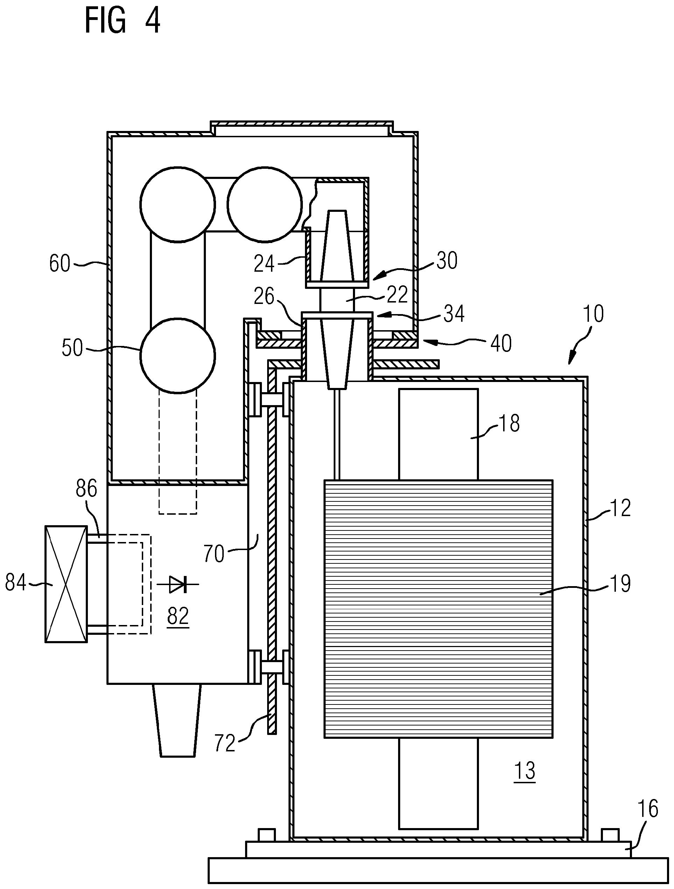

In der Figur 4 ist ein weiteres Ausführungsbeispiel des Umspannwerkes 1 gezeigt. Die Öl-Gas-Durchführung 22 und die Flanschverbindung 40 sind hierbei vertikal auf dem Deckel des Transformators 10 angeordnet. Ferner ist ein zusätzlicher Gleichrichter 82, bzw. Gleichrichtermodul, gezeigt, welcher mit dem Transformator 10 mechanisch verbunden ist. Gleichrichter stehen hier stellvertretend für alle weiteren zweckmäßigen elektronischen Bauelemente. So kann das Gleichrichtermodul auch als Umrichter mit Thyristoren, IGBTs oder GTOs ausgeführt sein. Die Gleichrichteranordnung ist in einem Gleichrichtermodul bzw. Gleichrichtercontainer untergebracht, welcher in diesem Ausführungsbeispiel beispielhaft mit Luft gefüllt ist. Die Kühlung des Gleichrichters 82 erfolgt in diesem Ausführungsbeispiel mittels einer Kühlanlage 84 mit einem damit verbundenen Kühlkreislauf 86. Vorzugsweise kommt dabei Wasser als Kühlmittel zum Einsatz.

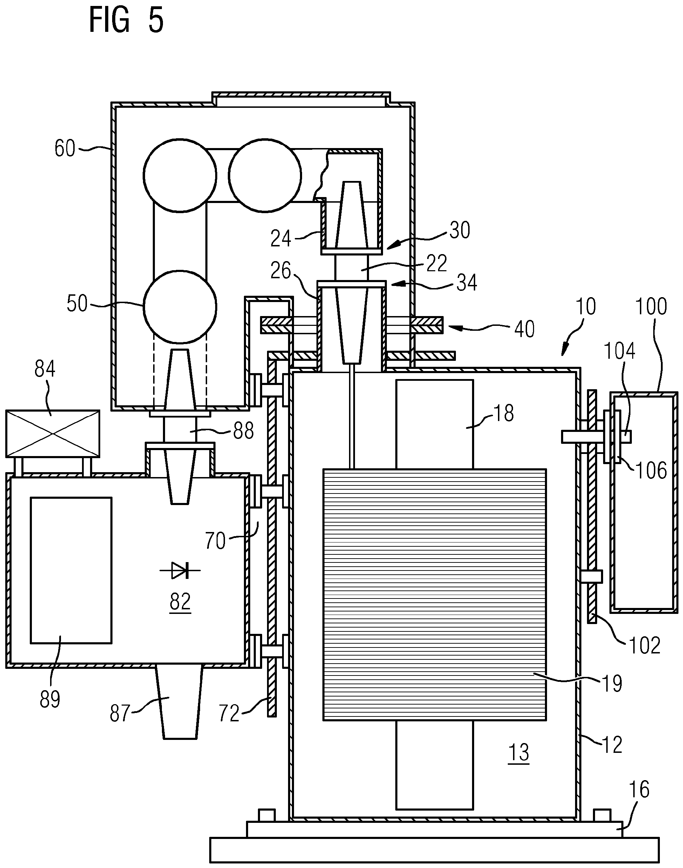

In der Figur 5 ist eine weitere, nicht erfindungsgemässe Ausführungsform des Umstellwerks 1 gezeigt. Gegenüber Figur 1 ist ebenfalls zusätzlich ein Gleichrichter 82, bzw. ein Gleichrichtermodul, welcher mit dem Transformator 10 mechanisch verbunden ist, vorgesehen. In diesem Ausführungsbeispiel ist eine Gleichrichteranordnung in einem fluidgefüllten Gefäß untergebracht. Dadurch lassen sich geringe elektrische Abstände und damit auch geringe Abmessungen des Gleichrichtermoduls erreichen. Die direkte Anordnung des Gleichrichters im Transformatorgefäß 12 des Transformators 10 ist aufgrund der verschiedenen thermischen Anforderungen ungünstig. So ist es vorteilhaft, die Fluidtemperatur im Gleichrichterraum auf einem deutlichen niedrigeren Wert einzustellen als die maximale Isolierfluidtemperatur des Transformators 10 bei Last. In dieser Ausführungsform ist zudem eine Öl-Gas-Durchführung 88 vom Gleichrichter 82 zur Schaltanlage 50 vorgesehen und eine Zugangsöffnung 89 und eine Kabeldurchführung 87 zum Gehäuse des Gleichrichters bereitgestellt. Weiterhin kann mit dieser Lösung einer möglichen abweichenden Lebensdauer der elektronischen Bauelemente von der zu erwartenden Lebensdauer des Transformators Rechnung getragen werden. Weiterhin sind Wartungsarbeiten bei getrennten Fluidräumen deutlich erleichtert. In diesem Ausführungsbeispiel erfolgt die Kühlung der Gleichrichter über die Isolierflüssigkeit des Gleichrichtermoduls.

Ferner ist in dieser Ausführung ein Zusatzmodul 100 vorgesehen, welches eine elektrische Funktionseinheit darstellt und mit dem Transformator mittels elektrischer Verbindungsleitungen 104 verbunden ist. Dieses Zusatzmodul 100 ist in dieser Ausführung ebenfalls an den Transformator 10 befestigt und insbesondere über eine die Verbindungsleitung 104 umschließende Flanschverbindung 106 an den Transformator 10 gekoppelt. Das Zusatzmodul 100 kann beispielsweise ein Unterspannungsschaltanlagenmodul, ein Steuer- und Überwachungsmodul, ein Gleichrichtermodul oder ein Batteriespeicher sein, wobei die Erfindung nicht darauf beschränkt ist. Auch hier kann ein thermisches Abschirmelement 102 zwischen Zusatzmodul 100 und Transformator 10 vorgesehen sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wie er in den Ansprüchen definiert ist.

### Bezugszeichenliste

- 1: Umspannwerk

- 10: Transformator
- 12: Transformatorgefäß
- 13: Isolierflüssigkeit/Öl
- 14: Befestigungsmittel
- 16: Transformatorfundament
- 18: Kern
- 19: Wicklung

- 20: elektrische Verbindung
- 22: Öl-Gas-Durchführung
- 24: schaltanlagenseitiger Dom
- 26: transformatorseitiger Dom
- 28: Handloch

- 30: erste Durchführungsflanschverbindung
- 31: erster domseitiger Flansch
- 32: erster Durchführungsflansch

- 34: zweite Durchführungsflanschverbindung
- 35: zweiter domseitiger Flansch
- 36: zweiter Durchführungsflansch

- 40: Flanschverbindung
- 42: Gehäuseflansch
- 44: Gegenflansch

- 50: Schaltanlage
- 52: Isoliergas

- 60: Gehäuse
- 62: Zugangsöffnung
- 64: mechanisches Befestigungsmittel
- 66: Kühlanlage
- 68: Kabeldurchführung
- 70: Spalt
- 72: thermisches Abschirmelement

- 80: Wärmetauscher
- 82: Gleichrichter
- 84: Kühlanlage
- 86: Kühlmittelkreislauf
- 87: Kabeldurchführung
- 88: Öl-Gas-Durchführung
- 89: Zugangsöffnung

- 90: Plattform
- 95: Kabel

- 100: Zusatzmodul
- 102: thermisches Abschirmelement
- 104: Verbindungsleitung
- 106: Flanschverbindung

- I: Innendurchmesser
- D: radiale Ausdehnung

## Patentansprüche

1. Umspannwerk (1), umfassend:
- einen Transformator (10);
- eine innerhalb eines mit Luft gefüllten Gehäuses (60) angeordnete und mit dem Transformator (10) über eine elektrische Verbindung (20) leitfähig verbundene gasisolierte Schaltanlage (50), wobei das Gehäuse (60) der Schaltanlage (50) über eine die elektrische Verbindung (20) umschließende Flanschverbindung (40) mit dem Transformator (10) verbunden ist,
wobei das Gehäuse (60) der Schaltanlage (50) von dem Transformator (10) thermisch entkoppelt ist, wobei das Gehäuse (60) der Schaltanlage (50) von dem Transformator (10) durch einen Spalt (70) zwischen Gehäuse (60) und Transformator (10) räumlich voneinander beabstandet ist, wobei die Flanschverbindung (40) einen an dem Gehäuse (60) angebrachten Gehäuseflansch (42) und einen daran anschließenden Gegenflansch (44) umfasst, wobei der Gegenflansch (44) außen an einem die elektrische Verbindung (20) umschließenden Dom (24, 26) angebracht ist, wobei die elektrische Verbindung (20) durch eine Öl-Gas-Durchführung (22) geführt ist, welche an einem Übergang von einem mit der Schaltanlage (50) verbundenen schaltanlagenseitigen Dom (24) und einem mit dem Transformator (10) verbundenen transformatorseitigen Dom (26) positioniert ist, wobei außen an dem transformatorseitigen Dom (26) der Gegenflansch (44) angebracht ist und wobei der transformatorseitige Dom (26) am Transformator (10) befestigt ist, in das Gehäuse (60) der Schaltanlage (50) hineinragt und von dem Gehäuseflansch (44) umschlossen ist.

2. Umspannwerk (1) nach einem der vorherigen Ansprüche, wobei zwischen dem Gehäuse (60) der Schaltanlage (50) und dem Transformator (10) ein thermisches Abschirmelement (72) positioniert ist.

3. Umspannwerk (1) nach Anspruch 1, wobei der Gehäuseflansch (42) einen Innendurchmesser (I) umfasst, welcher größer ist als eine radiale Ausdehnung (D) der Öl-Gas-Durchführung (22).

4. Umspannwerk (1) nach einem der vorherigen Ansprüche, wobei zumindest ein Dom (24, 26) mit einem Handloch (28) versehen ist, welches in der Nähe der Öl-Gas-Durchführung (22) und innerhalb des Gehäuses (60) der Schaltanlage (50) positioniert ist.

5. Umspannwerk (1) nach einem der vorherigen Ansprüche, wobei das Gehäuse (60) der Schaltanlage (50) eine Zugangsöffnung (62) zum Betreten des Gehäuses (60) umfasst.

6. Umspannwerk (1) nach einem der vorherigen Ansprüche, wobei das Gehäuse (60) der Schaltanlage (50) mit mechanischen Befestigungsmitteln (64) an dem Transformator (10) befestigt, bevorzugt lösbar befestigt ist.

7. Umspannwerk (1) nach einem der vorherigen Ansprüche, wobei ein Wärmetauscher (80), ein Gleichrichter (82) und/oder eine weitere elektrische Funktionseinheit zum Betrieb des Umspannwerks (1) an dem Transformator (10) mechanisch befestigt sind.

8. Umspannwerk (1) nach einem der vorherigen Ansprüche, wobei das Gehäuse (60) der Schaltanlage (50) und/oder der Gleichrichter (82) eine vom Transformator (10) unabhängige Kühlanlage (66, 84) umfassen.

9. Umspannwerk (1) nach einem der vorherigen Ansprüche, wobei die Schaltanlage (50) zusammen mit dem Transformator (10) des Umspannwerkes, bevorzugt eines Offshore-Umspannwerks, mittels eines an dem Transformator (10) angreifenden Befestigungsmittels (14) an eine Gründungsstruktur oder Plattform (90) befestigbar ist.

## Claims

1. Substation (1), comprising:
- a transformer (10);
- a gas-insulated switchgear (50) which is arranged inside a housing (60) filled with air and is conductively connected to the transformer (10) via an electrical connection (20), wherein the housing (60) of the switchgear (50) is connected to the transformer (10) via a flange connection (40) surrounding the electrical connection (20), wherein the housing (60) of the switchgear (50) is thermally decoupled from the transformer (10), wherein the housing (60) of the switchgear (50) is spatially distanced from the transformer (10) by a gap (70) between the housing (60) and the transformer (10), wherein the flange connection (40) comprises a housing flange (42) mounted on the housing (60) and a mating flange (44) connecting to said housing flange, wherein the mating flange (44) is mounted on the outside of a dome (24, 26) surrounding the electrical connection (20), wherein the electrical connection (20) is routed through an oil-gas feedthrough (22) which is positioned at a transition from a switchgear-side dome (24) connected to the switchgear (50) to a transformer-side dome (26) connected to the transformer (10), wherein the mating flange (44) is mounted on the outside of the transformer-side dome (26) and wherein the transformer-side dome (26) is fastened to the transformer (10), protrudes into the housing (60) of the switchgear (50) and is surrounded by the housing flange (44).

2. Substation (1) according to one of the preceding claims, wherein a thermal shielding element (72) is positioned between the housing (60) of the switchgear (50) and the transformer (10) .

3. Substation (1) according to Claim 1, wherein the housing flange (42) encloses an internal diameter (I) which is larger than a radial extent (D) of the oil-gas feedthrough (22).

4. Substation (1) according to one of the preceding claims, wherein at least one dome (24, 26) is provided with a hand hole (28) which is positioned in the vicinity of the oil-gas feedthrough (22) and inside the housing (60) of the switchgear (50) .

5. Substation (1) according to one of the preceding claims, wherein the housing (60) of the switchgear (50) comprises an access opening (62) for accessing the housing (60).

6. Substation (1) according to one of the preceding claims, wherein the housing (60) of the switchgear (50) is fastened to the transformer (10) by way of mechanical fastening means (64), preferably detachably fastened.

7. Substation (1) according to one of the preceding claims, wherein a heat exchanger (80), a rectifier (82) and/or a further electrical functional unit are/is mechanically fastened to the transformer (10) for operating the substation (1) .

8. Substation (1) according to one of the preceding claims, wherein the housing (60) of the switchgear (50) and/or the rectifier (82) comprise/comprises a cooling system (66, 84) that is separate from the transformer (10).

9. Substation (1) according to one of the preceding claims, wherein the switchgear (50), together with the transformer (10) of the substation, preferably of an offshore substation, is able to be fastened to a foundation structure or platform (90) by means of a fastening means (14) attached to the transformer (10).

## Revendications

1. Poste (1) de transformation, comprenant :
- un transformateur (10) ;
- une installation (50) de distribution, disposée à l'intérieur d'une enveloppe (60) emplie d'air, à isolation par du gaz et reliée d'une manière conductrice au transformateur (10) par l'intermédiaire d'une liaison (20) électrique, dans lequel l'enveloppe (60) de l'installation (50) de distribution est reliée au distributeur (10) par un bridage (40) entourant la liaison (20) électrique,
dans lequel l'enveloppe (60) de l'installation (50) de distribution est découplée thermiquement du transformateur (10), dans lequel l'enveloppe (60) de l'installation (50) de distribution est à distance dans l'espace du transformateur (10) par un intervalle (70) entre l'enveloppe (60) et le transformateur (10), dans lequel le bridage (40) comprend une bride (42) mise sur l'enveloppe (60) et une contre bride (44) s'y raccordant, dans lequel la contre bride (44) est montée à l'extérieur sur un dôme (24, 26) entourant la liaison (20) électrique, dans lequel la liaison (20) électrique passe dans une traversée (22) huile-gaz, qui est positionnée à une transition d'un dôme (24) du côté de l'installation de distribution relié à l'installation (50) de distribution et d'un dôme (26) du côté du transformateur relié au transformateur (10), dans lequel la contre bride (44) est mise à l'extérieur sur le dôme (26) du côté du transformateur et dans lequel le dôme (26) du côté du transformateur est fixé au transformateur (10), pénètre dans l'enveloppe (60) de l'installation (50) de distribution et est entouré de la bride (44) de l'enveloppe.

2. Poste (1) de transformation suivant l'une des revendications précédentes, dans lequel un élément (72) de protection thermique est positionné entre l'enveloppe (60) de l'installation (50) de distribution et le transformateur (10).

3. Poste (1) de transformation suivant la revendication 1, dans lequel la bride (42) de l'enveloppe comprend un diamètre (I) intérieur, qui est plus grand qu'une étendue (D) radiale de la traversée (22) huile-gaz.

4. Poste (1) de transformation suivant l'une des revendications précédentes, dans lequel au moins un dôme (24, 26) est pourvu d'un trou (28) de main, qui est positionné au voisinage de la traversée (22) huile-gaz et à l'intérieur de l'enveloppe (60) de l'installation (50) de distribution.

5. Poste (1) de transformation suivant l'une des revendications précédentes, dans lequel l'enveloppe (60) de l'installation (50) de distribution comprend une ouverture (62) d'accès pour pénétrer dans l'enveloppe (60).

6. Poste (1) de transformation suivant l'une des revendications précédentes, dans lequel l'enveloppe (60) de l'installation (50) de distribution est fixée au transformateur (10) en étant, de préférence, fixée de manière amovible par des moyens (64) de fixation mécaniques.

7. Poste (1) de transformation suivant l'une des revendications précédentes, dans lequel un échangeur de chaleur (80), un redresseur (82) et/ou une autre unité électrique fonctionnelle sont fixés mécaniquement au transformateur (10) pour faire fonctionner le poste (1) de transformation.

8. Poste (1) de transformation suivant l'une des revendications précédentes, dans lequel l'enveloppe (60) de l'installation (50) de distribution et/ou le redresseur (82) comprennent une installation (66, 84) de refroidissement indépendante du transformateur (10).

9. Poste (1) de transformation suivant l'une des revendications précédentes, dans lequel l'installation (50) de distribution peut, ensemble avec le transformateur (10) du poste de transformation, de préférence, un poste de transformation offshore, être fixée à une structure de fondation et une plateforme (90) au moyen d'un moyen (14) de fixation attaquant le transformateur (10).
